Europäisches Patentamt

(19) European Patent Office

Office européen des brevets

(11) Veröffentlichungsnummer: **0 153 421**
A1

(12) # EUROPÄISCHE PATENTANMELDUNG

(21) Anmeldenummer: 84100347.8

(22) Anmeldetag: 14.01.84

(51) Int. Cl.⁴: **A 01 K 31/00**
**B 65 D 85/50**

(43) Veröffentlichungstag der Anmeldung:
04.09.85 Patentblatt 85/36

(84) Benannte Vertragsstaaten:
AT BE CH DE FR GB IT LI LU NL SE

(71) Anmelder: Kundert Ing. Zürich AG für
Verfahrenstechnik + Automation
Badenerstrasse 808
CH-8048 Zürich(CH)

(72) Erfinder: Kundert, Hans Rudolf
Im Chline Engel
CH-6318 Walchwil(CH)

(74) Vertreter: Sax, Walter F.
Patentanwälte R.A. Maspoli und Partner
Promenadengasse 18
CH-8001 Zürich(CH)

(54) Transportbehälter für Schlachtgeflügel.

(57) Der Transportbehälter hat eine rechteckige Bodenfläche (1), durchbrochene Seitenwände (2 bis 5) und ein Deckenteil (6) sowie eine mit einem Klappdeckel (9) verschliessbare Ladeöffnung (8). Die Ladeöffnung und der Klappdeckel erstrecken sich über die ganze Fläche einer Seitenwand (2) und einen Flächenabschnitt (10) des Deckenteils. Dabei ist die Schwenkachse (11) des winkelförmigen Klappdeckels am Oeffnungsrand des Deckenteils angeordnet.

Durch diese Massnahme wird eine grösstmögliche Ladeöffnung erzielt, welche es ermöglicht, beim manuellen Beladen und beim automatischen Entladen des Transportbehälters die Tiere schonungsvoll zu behandeln und den Transportbehälter leicht und vollkommen zu reinigen und zu desinfizieren.

FIG. 1

- 1 -

0153421

Transportbehälter für Schlachtgeflügel

Die Erfindung betrifft einen Transportbehälter für Schlachtgeflügel, mit rechteckiger Bodenfläche, durchbrochenen Seitenwänden und Deckenteil und einer mit einem Klappdeckel verschliessbaren Ladeöffnung.

Für die Beschaffenheit eines derartigen Transportbehälters sind verschiedene Anforderungen hinsichtlich einer schonenden und rationellen Ueberführung der Tiere von der Mästerei zur Schlächterei massgebend. In allen Phasen dieser Ueberführung, d.h. beim manuellen Einfangen der Tiere und Beladen der Transportbehälter, Stapeln und Aufladen der Transportbehälter auf das Transportfahrzeug am Ort der Mästerei, während des Transports und beim Abladen und Entleeren der Transportbehälter am Ort der Schlächterei, ist neben dem Streben nach rationeller Betriebsweise und geringem manuellen Arbeitsaufwand für eine schonende Behandlung der Tiere zu sorgen. In der Praxis zeigt es sich, dass mit bekannten Transportbehältern für Schlachtgeflügel diese Bedingungen nur unvollkommen erfüllr werden können.

Ein bekannter Transportbehälter mit rechteckiger Bodenfläche von etwa 80 X 50 $cm^2$ und einer Höhe von etwa 25 cm fasst etwa 20 Hühner und besitzt in der Mitte des Deckenteils eine mit einem Klappdeckel verschliessbare Ladeöffnung in der Grösse von etwa 30 X 25 cm$^2$. Zum Beladen werden mehrere solcher Transportbehälter im Stall der Mästerei verteilt aufgestellt, die Tiere jeweils im näheren Umkreis jedes Transportbehälters eingefangen und einzeln durch die verhältnismässig kleine Ladeöffnung in den Transportbehälter verbracht. Wenn diese Arbeit sorgfältig und ruhig durchgeführt wird, kommen die Tiere dabei nicht zu Schaden.

Beim Entleeren in der Aufnahmestation der Schlächterei werden die Tiere wiederum von Hand dem Transportbehälter entnommen und an einer Schlachtkette der Reihe nach aufgehängt. In einer Schlächterei mit automatischer Zufuhr der gefüllten Transportbehälter und stetig fortbewegter Schlachtkette ist das Ueberführen der Tiere aus dem bewegten Transportbehälter an die ebenfalls bewegte Schlachtkette zeitlich an die Fördergeschwindigkeit der Anlage gebunden. Dies führt oft dazu, dass die Tiere ziemlich brüsk aus dem Transportbehälter herausgezerrt werden und dabei wegen der engen Ladeöffnung zudem verletzt werden können. Neben der wenig schonenden Behandlung der Tiere ist diese Art der manuellen Behälterentleerung auch wegen der starken körperlichen Beanspruchung des damit beschäftigten Personals, das ausserdem durch die enorme Staubentwicklung gesundheitlich beeinträchtigt wird, von erheblichem Nachteil. Für eine automatische Entleerung sind derartige Transportbehälter wegen der engen Ladeöffnung ungeeignet.

Ausser diesem Kleinbehälter ist ein Grossbehälter mit einer Bodenfläche von etwa 140 X 120 cm$^2$ bekannt, der mehrere übereinander angeordnete Fächer aufweist, die je gegen 100 Hühner aufnehmen können. Jedes Fach besitzt an einer Längsseite eine gänzlich aufklappbare Seitenwand mit an der Bodenkante angeordneter Schwenkachse. Bei einer Fachhöhe von etwa 25 cm misst die Ladeöffnung also etwa 140 X 25 cm$^2$. Diese verhältnismäaaig grosse Ladeöffnung ermöglicht an sich ein ungehindertes Be- und Entladen der Tiere. Es hat sich jedoch in der Praxis gezeigt, dass die Verwendung eines solchen Grossbehälters sowohl beim Beladen als auch beim Entladen Nachteile mit sich bringt, welche mit den Forderungen in bezug auf eine tiergerechte Behandlung des Schlachtgeflügels nicht zu vereinbaren sind.

Beim Beladen eines Grossbehälters müssen die Tiere in einem viel grösseren Umkreis eingefangen werden als im Falle mehrerer Kleinbehälter. Die Wege vom Fangort zum Transportbehälter sind dementsprechend länger. Gewöhnlich werden deshalb von einer Person jeweils mehrere Tiere zugleich aufgenommen und zum Transportbehälter getragen. Das Aufnehmen von beispielsweise vier bis fünf Tieren pro Hand, das anschliessende Tragen derselben zum Transportbehälter und schliesslich das gesamthafte, meist schwungvolle Einfüllen bzw. Einpferchen von acht bis zehn Tieren in ein Behälterfach ist mit Sicherheit weniger tierschonend als der analoge Vorgang beim Beladen eines Kleinbehälters, und für das Personal ist dieses Verfahren gleichermassen anstrengender.

In der Schlächterei werden diese Grossbehälter automatisch entleert, wobei die Tiere auf ein Förderband gelangen, das zum Standort der Schlachtkette führt, wo die Tiere vom Personal übernommen und aufgehängt werden. Die Entleerung erfolgt in der Weise, dass der Grossbehälter über dem Förderband in eine Schräglage gekippt wird, so dass die Tiere aus den Fächern rutschen und auf das Förderband fallen. Dabei kann die Gleitbahn der oberen Fächer durch ausziehbare Rutschbleche verlängert werden, um den freien Fall der Tiere zu verkürzen. Allenfalls in den Fächern hängengebliebene Tiere werden durch Rütteln des Grossbehälters in Schräglage herausbefördert. Bei einem solchen Entleerungsvorgang werden die Tiere, namentlich jene aus den oberen Fächern, Beschleunigungen ausgesetzt, welche für die Tiere ungewohnt sind und ihr Befinden erheblich beeinträchtigen können. Ausserdem besteht die Gefahr, dass die Tiere beim Abrutschen mit ihren Füssen im Spalt an dem am Boden befindlichen Scharnier des Klappdeckels hängenbleiben.

Grossbehälter haben zudem den Nachteil, dass sie wegen ihres hohen Gewichtes (voll beladen etwa 700 kg) schwerer zu handhaben sind. Infolge der Anordnung mehrerer Fächer ist die Reinigung des Grossbehälters ebenfalls erschwert.

Die Aufgabe der Erfindung besteht darin, einen Transportbehälter für Schlachtgeflügel zu schaffen, der einerseits eine rasche Ueberführung des Geflügels von der Mästerei zur Schlächterei und insbesondere eine automatische Entleerung ermöglicht, um den Zeitraum zwischen Fangen und Schlachten der Tiere so kurz wie möglich zu halten, und der es andererseits gestattet, die Forderungen, welche die Schonung der Tiere in allen Transportphasen zum Ziele haben, besser zu erfüllen.

Die Lösung dieser Aufgabe wird dadurch erreicht, dass erfindungsgemäss die Ladeöffnung und der Klappdeckel sich über die ganze Fläche einer Seitenwand und einen Flächenabschnitt des Deckenteils erstrecken und dass die Schwenkachse des winkelförmigen Klappdeckels am Oeffnungsrand des Deckenteils angeordnet ist.

Durch die erfindungsgemässen Massnahmen wird eine grösstmögliche Ladeöffnung erzielt, welche sich ununterbrochen über zwei Ebenen erstreckt. Damit vereinigt die erfindungsgemässe Lösung die Vorteile der zuvor beschriebenen bekannten Transportbehälter, unter Vermeidung der Nachteile derselben.

Vorzugsweise befindet sich die Ladeöffnung an einer Längsseite des Transportbehälters, wobei die Schwenkachse des Klappdeckels parallel zur Längsachse des Transportbehälters verläuft. Als Kleinbehälter mit beispielsweise den vorher genannten Massen konzipiert, lässt sich auf diese Weise eine Ladeöffnung erzielen, die etwa gleich gross ist wie diejenige eines Faches des beschriebenen Grossbehälters. Dazu wird ein Flächenabschnitt des Deckenteils benötigt, der lediglich etwa ein Drittel der Gesamtfläche desselben ausmacht. Im geöffneten Zustand des Transportbehälters sind also noch zwei Drittel der Bodenfläche überdeckt. Es besteht deshalb wenig Gefahr, dass die Tiere beim Beladen des Transportbehälters aus diesem wieder entfliehen können.

Ausserdem lässt sich die Fluchtgefahr noch dadurch verringern, dass ein Klappdeckel vorgesehen wird, der quer zu seiner Schwenkachse unterteilt, z.B. halbiert ist, wobei zum Beladen nur ein Teil des Klappdeckels geöffnet wird. Auch eine flächenmässig so reduzierte Ladeöffnung ist noch gross genug, um ein schonendes Einbringen der Tiere zu ermöglichen, insbesondere wenn nach einem Fang- und Ladeverfahren vorgegangen wird, wie es im Zusammenhang mit dem zuvor beschriebenen Kleinbehälter angegeben wurde. Die halbierte Ladeöffnung ist übrigens immer noch grösser als jene dieses bekannten Kleinbehälters.

Zum Entladen des Transportbehälters wird die ganze Ladeöffnung freigegeben, so dass eine rasche und vollständige Entleerung des Transportbehälters innerhalb eines vollautomatisch funktionierenden Entlade- und Beschickungssystems durchführbar ist. Dabei kann in ähnlicher Weise wie beim Entleeren eines Grossbehälters vorgegangen werden. Allerdings wird zur schonungsvolleren Behandlung der Tiere in dieser Transportphase ein Verfahren bevorzugt, bei dem der geöffnete Transportbehälter verhältnismässig langsam aus der horizontalen in eine wenigstens annähernd vertikale Lage gekippt wird. Dadurch kann die Beschleunigung der Tiere, welche bei einem einfachen Behälter an sich schon kleiner ausfällt als bei den oberen Fächern eines Grossbehälters, noch weiter verringert werden.

Zu diesem Zwecke kann eine Kippvorrichtung vorgesehen sein, welche sich über eine grössere Strecke der Fördereinrichtung für das reihenweise Zuführen der Transportbehälter ausdehnt, wobei die Transportbehälter während ihrer Fortbewegung auf dieser Strecke allmählich gekippt werden. Die dadurch verhältnismässig langsam aus den Transportbehältern rutschenden Tiere gelangen beispielsweise auf ein Förderband, das über die genannte Strecke parallel zur Bahn der Transportbehälter verläuft und vorzugsweise mit gleicher oder nur wenig unterschiedlicher Geschwindigkeit wie die Transportbehälter bewegt wird.

Da sich die Schwenkachse des Klappdeckels am Deckenteil des Transportbehälters befindet, entfallen die beim beschriebenen Grossbehälter am Boden der Fächer vorhandenen Scharnierteile, welche die Tiere beim Austritt aus dem Transportbehälter behindern könnten. Aus dem gleichen Grund werden zum Verriegeln des geschlossenen Klappdeckels benötigte Verschlussteile mit Vorteil so angebracht, dass an der Austrittspartie der Bodenfläche keine Unstetigkeiten vorhanden sind. Eine bevorzugte Lösung, welche diese Forderung auf einfache und wirkungsvolle Weise erfüllt, besteht darin, dass zum Fixieren des Klappdeckels in der Schliesslage wenigstens ein Magnetverschluss vorgesehen ist.

Die Erfindung bietet den weiteren Vorteil, dass sich der
Transportbehälter durch die verhältnismässig grosse Ladeöffnung leichter und vollkommener reinigen und desinfizieren lässt.

Aus lüftungstechnischen Gründen sind alle vier Seitenwände des Transportbehälters durchbrochen, d.h. es sind beispielsweise Lüftungsschlitze vorgesehen, welche eine genügende Durchlüftung des gestapelten Transportbehälters
gewährleisten. Beim Transport auf einem offenen Transportfahrzeug ist der Transportbehälter jedoch zusätzlich dem
Fahrwind ausgesetzt. Durch die an der Fahrzeuglängsseite
befindliche Seitenwand des Transportbehälters kann dabei
eine übermässig hohe, den Tieren nicht zuträgliche Zugluft entstehen.

Um diesen Nachteil zu vermeiden, kann der Klappdeckel
frontseitig vertikale, verstellbare Lüftungslamellen aufweisen. Die so ausgebildeten Transportbehälter werden jeweils in der Weise auf dem Transportfahrzeug angeordnet,
dass stets die Frontseite des Klappdeckels an die linke
oder rechte Fahrzeuglängsseite zu liegen kommt, und die
Lüftungslamellen werden jeweils so eingestellt, dass sie
den Fahrwind von den Lüftungsschlitzen abweisen. Zu diesem Zwecke können die Lüstungslamellen schwenkbar sein.
Eine andere Lösungsmöglichkeit besteht darin, die Lüftungslamellen in einem Rahmen schrägstehend anzuordnen,
wobei der Rahmen in zwei um 180° versetzten Lagen am
Klappdeckel anbringbar ist. Ein derartiger einheitlicher
Lüftungsrahmen mit feststehenden Lamellen kann also, in
entsprechender Stellung eingesetzt, auf beiden Fahrzeuglängsseiten die Funktion eines Windabweisers übernehmen.

In der Zeichnung sind Ausführungsbeispiele der Erfindung schematisch dargestellt, und zwar zeigen:

Fig. 1 einen Transportbehälter mit leicht angehobenem Klappdeckel,

Fig. 2 die Draufsicht eines Rahmens mit schrägstehenden Lüftungslamellen für den Einsatz an der Frontseite eines entsprechend abgeänderten Klappdeckels,

Fig. 3 und 4 je die Frontseite eines Transportbehälters ähnlich demjenigen nach Fig. 1, aber mit halbiertem Klappdeckel, wobei Fig. 3 den teilweise geöffneten und Fig. 4 den vollständig geöffneten Transportbehälter zeigt.

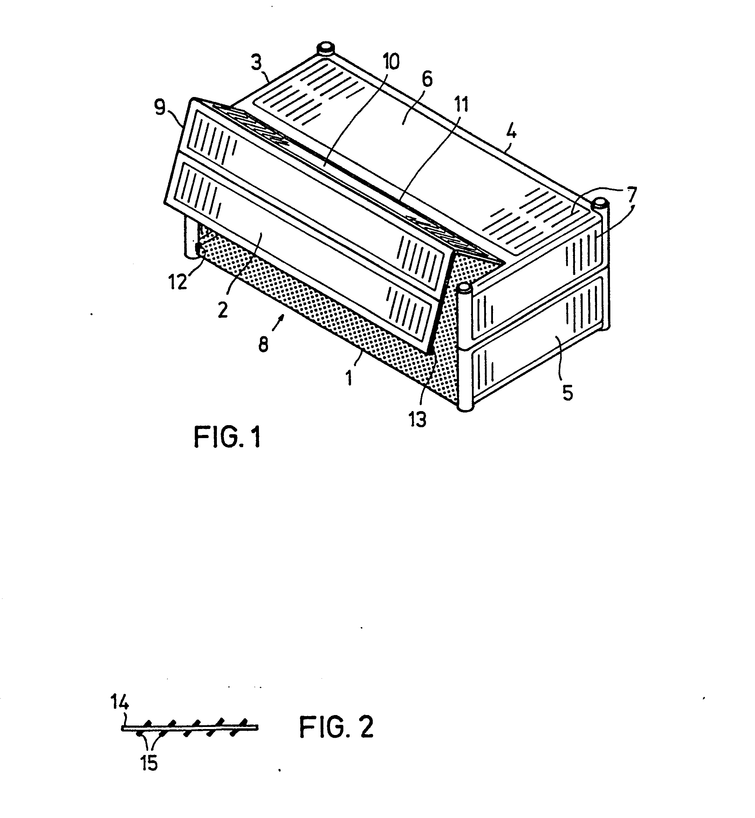

Der beispielsweise aus Kunststoff bestehende Transportbehälter nach Fig. 1 weist eine rechteckige Bodenfläche 1, Seitenwände 2 bis 5 und einen Deckenteil 6 auf. Alle Seitenwände 2 bis 5 und der Deckenteil 6 sind durchbrochen, im vorliegenden Beispiel mit durch Striche angedeuteten Lüftungsschlitzen 7 versehen. Ferner besitzt der Transportbehälter eine Ladeöffnung 8, die mit einem Klappdeckel 9 verschliessbar ist.

Die Ladeöffnung 8 und der Klappdeckel 9 erstrecken sich über die ganze Fläche der Längsseitenwand 2 und einen Flächenabschnitt 10 des Deckenteils 6. Die Schwenkachse 11 des winkelförmigen Klappdeckels 9 ist oben am Oeffnungsrand des Deckenteils 6 angeordnet und verläuft parallel zur Längsachse des Transportbehälters. Mit 12 und 13 sind Teile von Magnetverschlüssen angedeutet, welche den Klappdeckel 9 in der Schliesslage fixieren.

Die Längsseitenwand 2, d.h. die Frontseite des Klappdeckels 9 kann anstelle von Lüftungsschlitzen 7 eine rechteckige Oeffnung zum Einsetzen eines Rahmens 14 mit vertikalen, schrägstehenden Lüftungslamellen 15 gemäss Fig. 2 aufweisen.

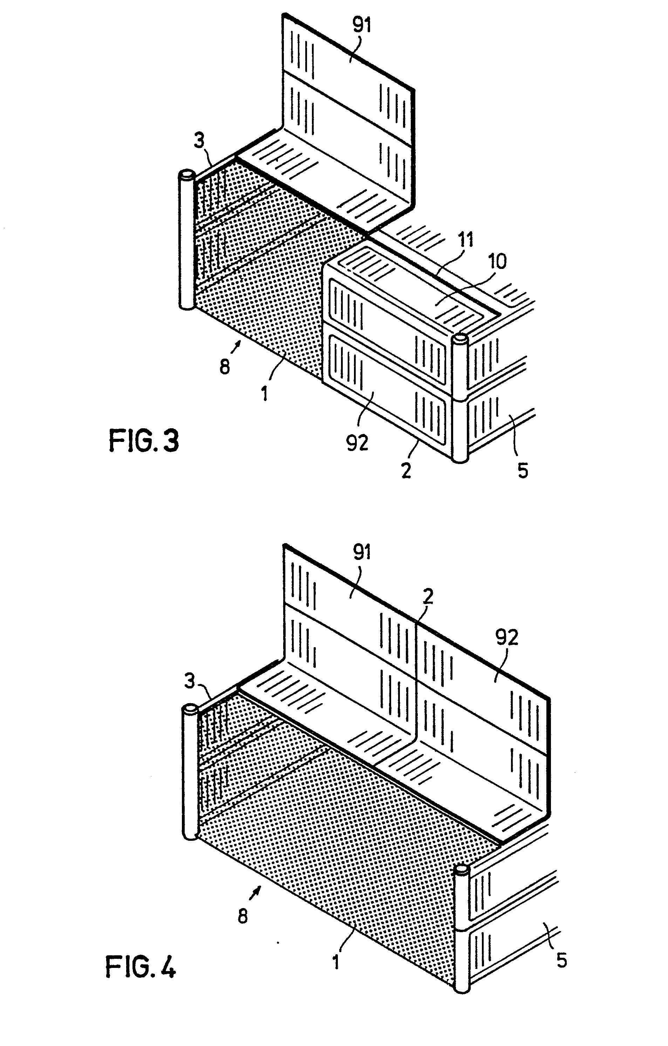

Der Transportbehälter nach den Fig. 3 und 4 ist mit einem quer zu seiner Schwenkachse 11 halbierten Klappdeckel ausgerüstet, wobei die beiden Deckelteile 91 und 92 unabhängig voneinander zu öffnen und zu schliessen sind. Zum Beladen des Transportbehälters kann gemäss Fig. 3 nur ein Deckelteil 91 geöffnet sein, während für das Entleeren des Transportbehälters gemäss Fig. 4 beide Deckelteile 91 und 92 geöffnet werden.

Der winkelförmige Klappdeckel 9 bzw. 91,92 wird sowohl in der Schliess- als auch in der Oeffnungslage durch sein Eigengewicht selbsttätig gehalten, da sich sein Schwerpunkt in diesen beiden Endlagen ausserhalb der die Schwenkachse enthaltenden Vertikalebene befindet. Deshalb sind für die Verriegelung des Klappdeckels in der Schliesslage keine aufwendige Mittel erforderlich.

Patentansprüche

1. Transportbehälter für Schlachtgeflügel, mit rechteckiger Bodenfläche, durchbrochenen Seitenwänden und Deckenteil und einer mit einem Kippdeckel verschliessbaren Ladeöffnung, dadurch gekennzeichnet, dass sich die Ladeöffnung (8) und der Klappdeckel (9;91,92) über die ganze Fläche einer Seitenwand (2) und einen Flächenabschnitt (10) des Deckenteils (6) erstrecken und dass die Schwenkachse (11) des winkelförmigen Klappdeckels am Oeffnungsrand des Deckenteils angeordnet ist.

2. Transportbehälter nach Anspruch 1, dadurch gekennzeichnet, dass sich die Ladeöffnung (8) an einer Längsseite des Transportbehälters befindet und dass die Schwenkachse (11) des Klappdeckels (9;91,92) parallel zur Längsachse des Transportbehälters verläuft.

3. Transportbehälter nach Anspruch 1, dadurch gekennzeichnet, dass der Klappdeckel (91,92) quer zu seiner Schwenkachse (11) unterteilt ist.

4. Transportbehälter nach Anspruch 1, dadurch gekennzeichnet, dass der Klappdeckel (9) frontseitig vertikale, verstellbare Lüftungslamellen (15) aufweist.

5. Transportbehälter nach Anspruch 4, dadurch gekennzeichnet, dass die Lüftungslamellen schwenkbar sind.

6. Transportbehälter nach Anspruch 4, dadurch gekennzeichnet, dass die Lüftungslamellen (15) in einem Rahmen (14) schrägstehend angeordnet sind, wobei der Rahmen in zwei um 180° versetzten Lagen am Klappdeckel (9) anbringbar ist.

7. Transportbehälter nach Anspruch 1, dadurch gekennzeichnet, dass zum Fixieren des Klappdeckels (9;91,92) in der Schliesslage wenigstens ein Magnetverschluss (12,13) vorgesehen ist.

FIG. 1

FIG. 2

0153421

FIG.3

FIG.4

# EUROPÄISCHER RECHERCHENBERICHT

Europäisches Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US - A - 3 695 232 (FRANK) | | A 01 K 31/00 |
| | * Spalte 1, Zeilen 1-4; Spalte 2, Zeilen 29-46; Spalte 2, Zeilen 57-62; Figuren | 1,3 | B 65 D 85/50 |
| Y | -- | 2,7 | |
| Y | US - A - 3 301 619 (MEAD) | | |
| | * Spalte 2, Zeilen 52-57; Figuren 1-3 * | 2 | |
| A | -- | 1 | |
| Y | FR - A - 1 566 634 (S.I.D.E.C.) | | |
| | * Seite 2, linke Spalte, Zeilen 7-10; Figur 3 * | 7 | |
| | -- | | RECHERCHIERTE SACHGEBIETE (Int. Cl. 3) |
| A | US - A - 2 109 902 (HATCH) | | |
| | * Figur 8 * | 1,2 | B 65 D |
| | -- | | A 01 K |
| A | FR - A - 1 589 543 (S.I.T.A.R.) | | |
| | -------- | | |

Der vorliegende Recherchenbericht wurde für alle Patentansprüche erstellt.

| Recherchenort | Abschlußdatum der Recherche | Prüfer |
|---|---|---|
| DEN HAAG | 13-09-1984 | MARTENS |

EPA Form 1503 03.82

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

Europäisches
Patentamt

0153421

## GEBÜHRENPFLICHTIGE PATENTANSPRÜCHE

Die vorliegende europäische Patentanmeldung enthielt bei ihrer Einreichung mehr als zehn Patentansprüche

☐     Alle Anspruchsgebühren wurden innerhalb der vorgeschriebenen Frist entrichtet. Der vorliegende europäische Recherchenbericht wurde für alle Patentansprüche erstellt.

☐     Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt für die Anspruchsgebühren entrichtet wurden.

      nämlich Patentansprüche

☐     Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung, sie enthält mehrere Erfindungen oder Gruppen von Erfindungen.

nämlich

1. Patentansprüche 1,2,3,7: ·Ladeöffnung und Klappdeckel

2. Patenansprüche 1,4,5,6: Verstellbare Lüftungslamellen

☐     Alle weiteren Recherchengebühren wurden innerhalb der gesetzten Frist entrichtet. Der vorliegende europäische Recherchenbericht wurde für alle Patentansprüche erstellt

☐     Nur ein Teil der weiteren Recherchengebühren wurde innerhalb der gesetzten Frist entrichtet. Der vorliegende europäische Recherchenbericht wurde für die Teile der Anmeldung erstellt. die sich auf Erfindungen beziehen. für die Recherchengebühren entrichtet worden sind

      nämlich Patentansprüche

☒     Keine der weiteren Recherchengebühren wurde innerhalb der gesetzten Frist entrichtet. Der vorliegende europäische Recherchenbericht wurde für die Teile der Anmeldung erstellt. die sich auf die zuerst in den Patentansprüchen erwähnte Erfindung beziehen.

      nämlich Patentansprüche     1,2,3,7